# EUROPEAN PATENT APPLICATION

(11) **EP 2 348 385 A2**
(43) Date of publication of application: **27.07.2011**
(21) Application number: 11152064.9
(22) Date of filing: 25.01.2011
(51) Int. Cl.: G06F 3/023, G06F 3/048

(54) **Interaction with a data processing system having a graphical interface**

(30) Priority: 26.01.2010 IT MI20100087
(71) Applicant: Volos Informatica S.r.l., 10015 Ivrea (TO) (IT)
(72) Inventor: Schiffini, Bruno, 10015 Ivrea (TO) (IT); Schiffini, Stefano, 10015 Ivrea (TO) (IT)
(74) Representative: Pietra, Giulia

(57) **Abstract**

A computer program product configured to interact with a data processing system having a graphical interface suitable for being displayed on a computer screen is described. The computer program product comprises code portions for implementing a method when the computer program is run on the computer. The method comprises the following steps: reading an alphanumeric character comprised in an area of the graphical interface; processing the read alphanumeric character; and, according to a result of the processing, issuing a command to the data processing system through the graphical interface, simulating a manual usage of an input peripheral of the computer to perform an action on a graphical object of the graphical interface.

## Description

The present invention relates generally to the data processing field. In particular, the present invention relates to a computer program product configured to interact with a data processing system having a graphical interface.

In the present description and the claims, the expression "data processing system having a graphical interface" is understood as meaning a computer system comprising at least one computer program suitable for being run by a computer and generating, when run by the computer, a graphical interface suitable for being displayed on the screen of the computer itself and allowing a user to interact with the system.

For example, the graphical interface may allow the user to display the results of the processing performed by the system and/or issue commands to the system. For this purpose, the graphical interface generally comprises areas in which portions of text and/or images generated or retrieved by the system are displayed, and graphical objects such as: fields which can be filled in by the user, pull-down menus (provided, where necessary, with scrollbars) which offer different options which can be selected by the user, widgets (such as buttons and tick boxes) which can be clicked on by the user, etc.

The commands may be issued by the user by selecting the graphical objects of the graphical interface by means of the input peripherals (typically a mouse and keyboard) of the computer which is executing the data processing system. For example, the user may issue a command to the system using the mouse to select a field of the graphical interface and using the keyboard to write one or more words in the field.

The inventors have perceived that, in certain situations, the interaction described above between user and data processing system via the graphical interface of the system has a number of drawbacks.

Firstly, the interaction with the data processing system may be performed correctly only by a user who has a sufficient knowledge of the structure and the logic of the graphical interface.

Moreover, since the user must perform a number of manual steps, the interaction with the data processing system may disadvantageously be very slow, if the user is not particularly skilful with use of the mouse and keyboard.

This problem is even greater in the case where the interaction requires the repetition of the same manual operations very many times. This may occur for example in the case where the data processing system is a data archiving and management system (i.e. a data processing system which allows a private enterprise or a public or private body to manage accounts, orders, warehouse stocks, human resources, etc.), when a very large amount of data must be entered into the system. This situation may occur, for example, in the case of creation of the system from new, in the case of bank reconciliation operations, automatic closure of open items with data supplied by the banks, automatic allowance for very small outstanding sums, etc.

The inventors have perceived that the abovementioned drawbacks are solved by a computer program product (referred to below also as "interaction computer program") configured to interact automatically with the data processing system through its graphical interface and in particular to read any alphanumeric characters included in an area of the graphical interface, process any read alphanumeric characters and, according to the result of the processing, issue a command to the data processing system through the graphical interface simulating the manual use of the mouse and/or keyboard by the user in order to perform an action on one or more graphical objects of the graphical interface. The action depends on the type of graphical object. For example, if the graphical object is a field, the action comprises selecting the field and/or writing one or more words in the field. If the graphical object is a pull-down menu, the action comprises selecting one of its items. If the graphical object is a widget, the action comprises selecting the widget.

This advantageously results in much faster interaction with the data processing system. Moreover, the use may not have any knowledge of the structure and the logic of the graphical interface. The user in fact merely has to start the computer program product which then executes automatically the interactive operations (namely reading and issuing of commands) with the system through its graphical interface, without requiring any longer any manual action by the user.

According to a first aspect, the present invention provides a computer program product configured to interact with a data processing system having a graphical interface suitable for being displayed on a screen of a computer, wherein the computer program product comprises code portions to perform a method when the computer program product is run on the computer, wherein the method comprises the steps of:
a) reading at least one first alphanumeric character comprised in an area of the graphical interface;
b) processing the at least one first read alphanumeric character; and
c) according to a result of the processing, issuing a command to the data processing system through the graphical interface,
wherein step c) comprises simulating a manual usage of an input peripheral of the computer to perform an action on at least one graphical object of the graphical interface.

Preferably, the step of simulating a manual usage of an input peripheral comprises simulating a manual displacement of a mouse of the computer to move a pointer on the graphical interface.

Preferably, the step of simulating the manual displacement of a mouse is implemented by means of a function SetCursorPos().

Preferably, the step of simulating a manual usage of an input peripheral comprises simulating a manual push of a button of the mouse to select a graphical object of the graphical interface.

Preferably, the step of simulating a manual push of a button of the mouse is implemented by means of a function mouse_event.

Preferably, the step of simulating a manual usage of an input peripheral comprises simulating a manual push of at least one key of a keyboard of the computer to write at least one second alphanumeric character on the graphical interface.

Preferably, the step of simulating a manual push of at least one key of a keyboard comprises recovering the at least one second alphanumeric character from a cache memory of the computer, and applying a command Keybd_event to the at least one second recovered alphanumeric character.

Preferably, step a) is implemented by means of an optical character recognition program OCR.

Preferably, the method further comprises the following steps:
- disabling the input peripheral before performing steps a), b) and c);
   and
- enabling the input peripheral after having performed steps a), b)
   and c).

Preferably, the method comprises also the following steps, after step c):
d) reading at least one third alphanumeric character displayed by the data processing system on the graphical interface following the execution of the command;
e) processing the at least one third read alphanumeric character; and
f) according to a result of the processing, issuing a further command to the data processing system through the graphical interface,
wherein step f) comprises simulating a further manual usage of the input peripheral to perform a further action on the at least one graphical object of the graphical interface.

Preferably, the method further comprises a step of interrupting the execution of steps a), b) and c) at the reception of a "pause" instruction or of a "stop" instruction from an instruction input device cooperating with the computer.

Preferably, the method comprises also a step of modifying the execution speed of steps a), b) and c) at the reception of a "set/change speed" instruction from an instruction input device cooperating with the computer.

According to a second aspect, the present invention provides a digital data storage device encoding a computer program product, wherein the computer program product is as described above.

According to a third aspect, the present invention provides a computer configured to execute a data processing system and having a screen configured to display a graphical interface of the data processing system, said computer being further configured to run a computer program product as described above.

The present invention will become clearer from the following detailed description, provided by way of a non-limiting example, to be read with reference to the accompanying drawings in which:
- Figure 1 schematically shows a data processing system cooperating with an interaction computer program according to an embodiment of the present invention;
- Figure 2 shows a flow chart of operation of the interaction computer program according to an embodiment of the present invention;
- Figures 3a and 3b are flow charts which show in greater detail one of the steps according to Figure 2;
- Figures 4a, 4b and 4c schematically show the graphical interface of an exemplary data processing system during three different stages of execution of the interaction computer program; and
- Figures 5a, 5b and 5c show an exemplary application of the interactive computer program.

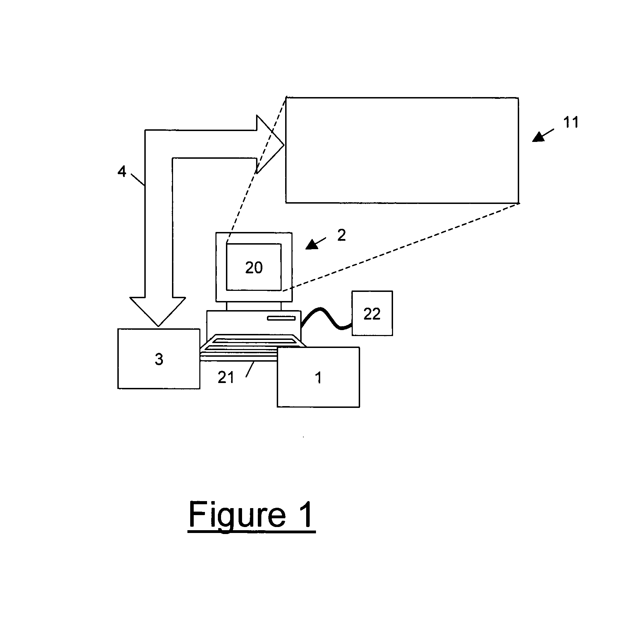

Figure 1 schematically shows a data processing system 1 suitable for being run by a computer 2. The data processing system 1 is preferably configured to generate, when run by the computer 2, a graphical interface 11 which allows a user to interact with the data processing system 1. The data processing system 1 may, for example, comprise a web browser, an email program, a data archiving and management program (for example, a program for managing accounts, warehouse stocks, human resources, etc.), an industrial process control program, etc.

The computer 2 comprises a screen 20 and at least one input peripheral 21, 22. Preferably, the at least one input peripheral 21, 22 comprises a keyboard 21 and a mouse 22 (or, alternatively, a touchpad). Preferably, the computer 2 is able to display on its screen 20 the graphical interface 11 generated by the data processing system 1.

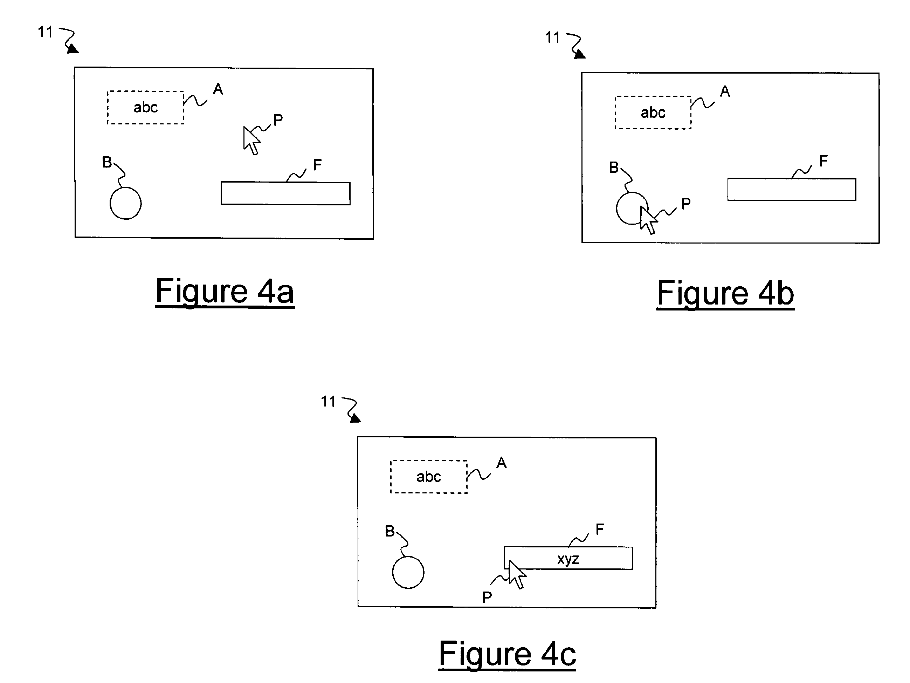

Figure 4a shows in greater detail the graphical interface 11 displayed on the screen 20 of the computer 2. The graphical interface 11 preferably comprises one or more areas within which the data processing system 1 is able to display portions of text and/or images. By way of example, Figure 4a shows a single area A inside which a portion of text "abc" is displayed. Moreover, preferably, the graphical interface 11 comprises one or more graphical objects such as: fields which can be filled in by the user, pull-down menus (provided, where necessary, with scrollbars) which offer different options which can be selected by the user, widgets (such as buttons and tick boxes) which can be clicked on by the user, etc. For greater simplicity, Figure 4a shows a single field F and a single button B. Figure 4a also shows a pointer P the movements of which on the screen 20 (and in particular on the graphical interface 11) are determined by corresponding movements of the mouse 22.

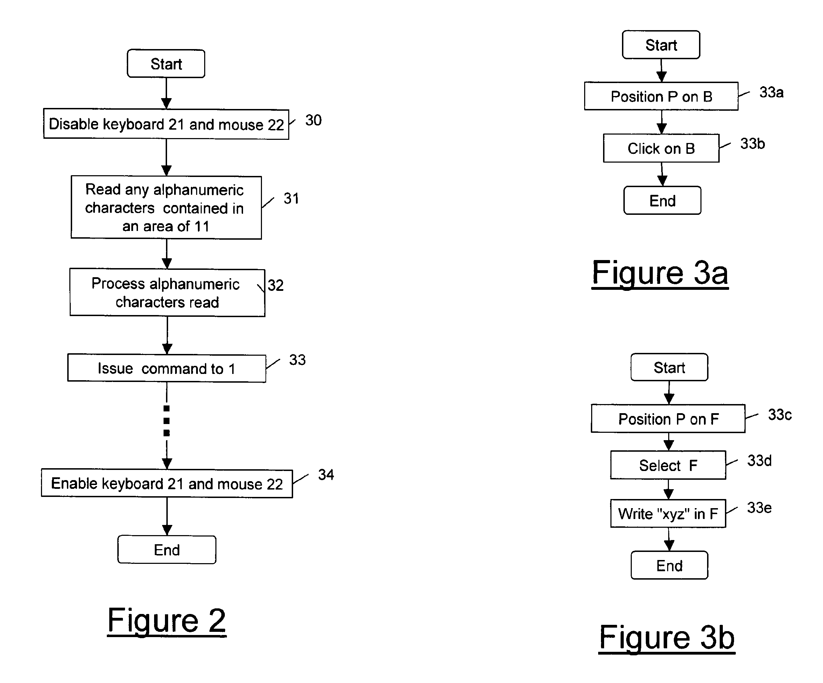

According to a preferred embodiment of the present invention, the computer 2 is able to run also an interaction computer program 3. The interaction computer program 3 is configured to cooperate with the graphical interface 11 (as indicated schematically by the arrow 4 in Figure 1) so as to interact automatically with the data processing system 1, as will be described in detail hereinbelow with reference to Figure 2.

More particularly, assuming that the data processing system 1 is already being run by the computer 2, when a user starts execution of the interaction computer program 3 on the computer 2, the interaction computer program 3 preferably firstly disables the keyboard 21 and the mouse 22 (step 30). In this way, these input peripherals are unable to send to the computer 2 any command during the subsequent steps performed by the interaction computer program 3. This advantageously ensures that the user is unable to interfere with the interaction computer program 3 during execution thereof.

The interaction computer program 3 therefore preferably reads any alphanumeric characters included in the area A of the graphical interface 11 (step 31). In the examplary interface 11 shown in Figure 4a, the portion of text "abc" is displayed in the area A. During the step 31, the interaction computer program 3 therefore preferably reads the alphanumeric characters which form the portion of text "abc".

Preferably, step 31 is implemented using an optical character recognition program (OCR) such as an OCR Screen object. In this case, during programming, it is required to provide the interaction computer program 3 with the coordinates (x,y) of the top left-hand corner and the coordinates (x1, y1) of the bottom right-hand corner of the area A inside which it must read any alphanumeric characters.

Then the interaction computer program 3 preferably processes the alphanumeric characters read during step 31 (step 32) and, according to the result of this processing operation, issues a command to the data processing system 1 (step 33).

Preferably, during step 33 the interaction computer program 3 issues the command to the data processing system 1 via the graphical interface 11, simulating the manual usage of the input peripherals 21, 22 by the user, in order to perform actions on the graphical objects B, F of the graphical interface 11.

With reference to the flow chart shown in Figure 3a, in order to issue the command, the interaction computer program 3 may for example displace the pointer P onto the button B of the graphical interface 11, as shown in Figure 4b (sub-step 33a) and click on it (sub-step 33b), thus simulating the actions which a user would perform manually by means of the mouse 22 on the button B. Preferably, the sub-step 33a is implemented by means of the known function SetCursorPos() of Windows API (which simulates a displacement of the mouse 22 by the user). Moreover, preferably, the sub-step 33b is implemented by means of the function mouse_event (which simulates pressing of the left-hand button of the mouse 22 by the user). So that the interaction computer program 3 is able to carry out the sub-step 33a, during programming it is required to input to the function SetCursorPos() the coordinates (xp, xy) of any point of the button B. The known function GetCursorPos() of Windows API may be advantageously used during execution of the interaction computer program 3 in order to retrieve the position of the pointer P on the screen 20.

As an alternative to or in addition to that stated above, with reference to the flow chart shown in Figure 3b, in order to issue the command, the interaction computer program 3 may displace the pointer P on the field F of the graphical interface 11 as shown in Figure 4c (sub-step 33c), select the field F (sub-step 33d) and write one or more alphanumeric characters "xyz" in this field (sub-step 33e), thus simulating the actions which a user would perform manually by means of the mouse 22 and the keyboard 21 on the field F. Preferably, sub-step 33c is also implemented by means of the known function SetCursorPos() mentioned above, and also the sub-step 33d is implemented by means of the function mouse event mentioned above. So that the interactive computer program 3 is able to carry out sub-step 33c, during programming it is required to input to the function SetCursorPos() the coordinates (xp', yp') of any point of the field F.

Preferably, sub-step 33e is performed using the known command Keybd_event of Windows API (which simulates the pressing of the keys on the keyboard 21 by the operator). The sequence of the keys, pressing of which must be simulated (namely the key "x" followed by the key "y" followed by the key "z"), is preferably stored prior to the sub-step 33e in the cache memory of the computer 2 (not shown in Figure 1). In sub-step 33e, the interaction computer program 3 preferably retrieves from the cache memory of the computer 2 the sequence of keys and supplies it to the command Keybd_event. This solution advantageously allows minimizing the execution time of sub-step 33e since the response times of the computer 2 are kept to a minimum. As an alternative to the command Keybd_event, it is possible to use the known method Sendkey of Windows API.

In order to terminate sub-step 33e, the interaction computer program 3 preferably confirms writing of the alphanumeric characters "xyz" in the field F. The confirmation may be performed for example by simulating pressing of the "enter" key of the keyboard 21 (again using the command Keybd_event) or displacing the pointer P onto an appropriate confirm button of the graphical interface 11 not shown in the drawings (again using the command SetCursorPos()) and clicking on it (again using the function mouse_event).

At the end of step 33, the interaction computer program 3 may perform other steps (not shown in Figure 1) such as: reading on the graphical interface 11 (again in the area A, or in another area of the graphical interface 11 specified during programming) further alphanumeric characters displayed following the execution of the command issued by the interaction computer program 3 during step 33, processing these further characters and issuing, according to the result of the further processing, a further command to the data processing system 1. The steps of reading alphanumeric characters from graphical interface areas, processing the alphanumeric characters read and issuing suitable commands to the data processing system may be further repeated.

Then, the interaction computer program 3 preferably enables again the keyboard 21 and the mouse 22 (step 34). In this way, the user may close the interaction computer program 3 and, if desired, continue to use the graphical interface 11 in order to interact manually with the data processing system 1 using the input peripherals 21, 22.

Preferably, the interaction computer program 3 is configured to receive one or more instructions from the user during its execution, such as:
a) "pause" instruction: upon reception of this instruction, the interaction computer program 3 preferably completes execution of the step in progress, enables again the keyboard 21 and the mouse 22, and frees the computer 2 so that the user may perform an analysis of the result of the automatic interaction, or resume execution;
b) "stop" instruction: upon reception of this instruction, the execution of the interaction computer program 3 is preferably suspended, and the computer 2 is again made available for the user;
c) "set/change speed" instruction: upon reception of this instruction, the interaction computer program 3 preferably modifies the speed of execution of steps 31-33 according to the instructions of the user; and
d) "enable/disable peripherals" instruction: upon reception of this instruction, the interaction computer program 3 preferably continues the execution of steps 31-33, but again enables the keyboard 21 and the mouse 22.

The instructions listed above may be issued by the user for example via an instruction input device such as a badge reader or bar code reader device (not shown in Figure 1) cooperating with the computer 2.

Moreover, preferably, the interaction computer program 3 generates a log file containing one or more reports listing the operations performed during execution thereof. This advantageously allows the user or the personnel responsible for installation and maintenance of the interaction computer program 3 to carry out statistical assessments of the performance, identify the cause of any errors or malfunctions, etc.

Moreover, preferably, the interaction computer program 3 is able to operate in test mode or in operating mode.

In test mode, steps 31-33 in the flow chart of Figure 2 are carried out slowly, so that the user or the personnel responsible for installation and maintenance of the interaction computer program 3 is able to follow operation of the interaction computer program 3 step by step. In this test mode, the log file compiled by the interaction computer program 3 is preferably displayed together with the graphical interface 11 on the screen 20 (for example alongside it) during execution of the interaction computer program 3. In this way, the user or the personnel responsible for installation and maintenance of the interaction computer program 3 may control the contents of the log file while it is being written substantially in real time.

In operating mode, steps 31-33 of the flow chart of Figure 2 are performed at the speed set by the user by means of the "set/change speed" instruction described above. The log file compiled by the interaction computer program 3 is preferably stored in a data base cooperating with the computer 2 so that it may be opened and consulted by the user or by the personnel responsible for installation and maintenance of the interaction computer program 3 at the end of execution of the interaction computer program 3.

The interaction computer program 3 therefore advantageously allows interaction with the data processing system 1 via the graphical interface 11 in an entirely automated manner, without requiring any manual action by the user (except for starting of the interaction computer program itself and closing thereof). This results advantageously in much faster interaction, which is particularly advantageous in the case where interaction envisages the repetition of steps 31-33 many times.

Furthermore, advantageously, it is not required to carry out any modification of the data processing system 1. The interaction computer program 3 in fact simulates accurately the operations which are traditionally performed manually by the user, in particular the operations of reading the alphanumeric characters from the graphical interface and the operations of issuing commands to the system 1 by acting upon graphical objects of the graphical interface 11 using the keyboard 21 and the mouse 22. This advantageously allows the interaction computer program 3 to be applied to the data processing system 1 without modifying the code portions of the system 1 which define the modes in which the system 1 outputs data generated or retrieved (in particular portions of text) and receives commands at its input.

Furthermore, advantageously, the interaction computer program 3 may be applied to any data processing system, independently of its characteristics (in particular independently of the logic and graphic characteristics of the graphical interface). The interaction computer program 3 may in fact be advantageously personalized during programming so as to interact with any data processing system.

For this purpose, the interaction computer program 3 is preferably provided with a command file (not shown in the drawings) which contains the instructions which the interaction computer program 3 follows during execution thereof and which may be suitably configured by the programmer once the logic and graphic features of the graphical interface have been determined.

For example, with reference to the example above, the command file of the interaction computer program 3 suitable for interacting with the graphical interface 11 shown in Figures 4a-4c preferably comprises:
i) an instruction for blocking keyboard 21 and mouse 22 (step 30);
ii) an instruction for reading the alphanumeric characters included in the screen portion 20, the top left-hand vertex of which has coordinates (x,y) and the bottom right-hand vertex of which has coordinates (x1,y1) (step 31);
iii) an instruction for processing the characters read and, according to the processing, generating a command intended for the system 1 (step 32);
iv) an instruction for sending a command to the system 1 (step 33); This instruction may comprise, if step 33 is as shown in Figure 3a:
   - an instruction SetCursorPos() for positioning the pointer P at the point of the coordinates (xP, yP) of the screen 20 (sub-step 33a), and
   - a command mouse_event (sub-step 33b).
   This instruction may comprise, if step 33 is as shown in Figure 3b;
   - an instruction SetCursorPos() for positioning the pointer P at the coordinate point (xP', yP') of the screen 20 (sub-step 33c),
   - a command mouse_event (sub-step 33d); and
   - a function Keybd_event having as input the sequence of keys "x", "y" and "z" (sub-step 33e); and
v) an instruction for releasing keyboard 21 and mouse 22 (step 34).

In the case where the user of the interaction computer program 3 wishes to modify the graphical properties of the graphical interface 11 (for example, modify the form and/or the position of the area A or move the field F or the button B, etc.), it is sufficient to modify suitably the instructions ii) and/or iv) in the command file.

Herein below, two exemplary applications of the interaction computer program 3 will be illustrated below.

According to a first exemplary application, the data processing system 1 comprises a web browser (for example, Internet Explorer, Netscape, etc.) connected to a given web page (for example, a news page) and an email program (for example Outlook, Thunderbird, etc.). The graphical interface 11 of the data processing system 1 therefore comprises a first window generated by the web browser (inside which the contents of the web page are displayed) and a second window generated by the email program. These two windows may be, for example, displayed alongside each on the screen 20 or partially or completely superimposed on each other.

Let us assume that a service is to be implemented so that the user may choose a topic and, when an article relating to the chosen topic is published on the web page, the entire article is sent via email to the user.

This service may be implemented by an interaction computer program 3 configured to carry out the following operations.

The interaction computer program 3, once started by a user, preferably blocks keyboard 21 and mouse 22 and, during a step substantially corresponding to step 31 in Figure 2, reads the alphanumeric characters present in the whole of the first window (namely on the entire web page) or in a predefined area. During a following step substantially corresponding to step 32 of Figure 2, the interaction computer program 3 compares all the alphanumeric character strings read with one or more comparison words indicating the topic chosen by the user. If a correspondence is found, during a following step substantially corresponding to step 33 in Figure 2, the interaction computer program 3 preferably reads from the first window the alphanumeric characters of the entire article which contains the comparison word and issues to the system a command for sending via email the alphanumeric characters of the entire article to the user. For this purpose, the interaction computer program 3 preferably induces the email program to open a new message (simulating the operation of clicking the appropriate button on the second window by means of the mouse 22), then writes the alphanumeric characters of the article in the body of the message (simulating pressing of the keys of the keyboard 21), then writes the address of the user (for example opening the address book and copying the address from the address book) and finally induces the email program to send the message (again simulating the operation of clicking the appropriate button on the second window by means of the mouse 22).

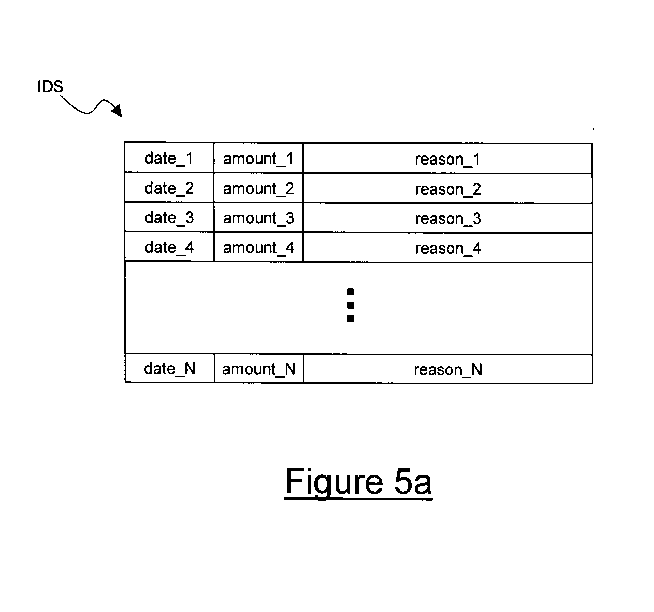

A second exemplary application will now be described with reference to Figures 5a-5c. According to this second exemplary application, the data processing system 1 is a data archiving and management system suitable for managing company accounts.

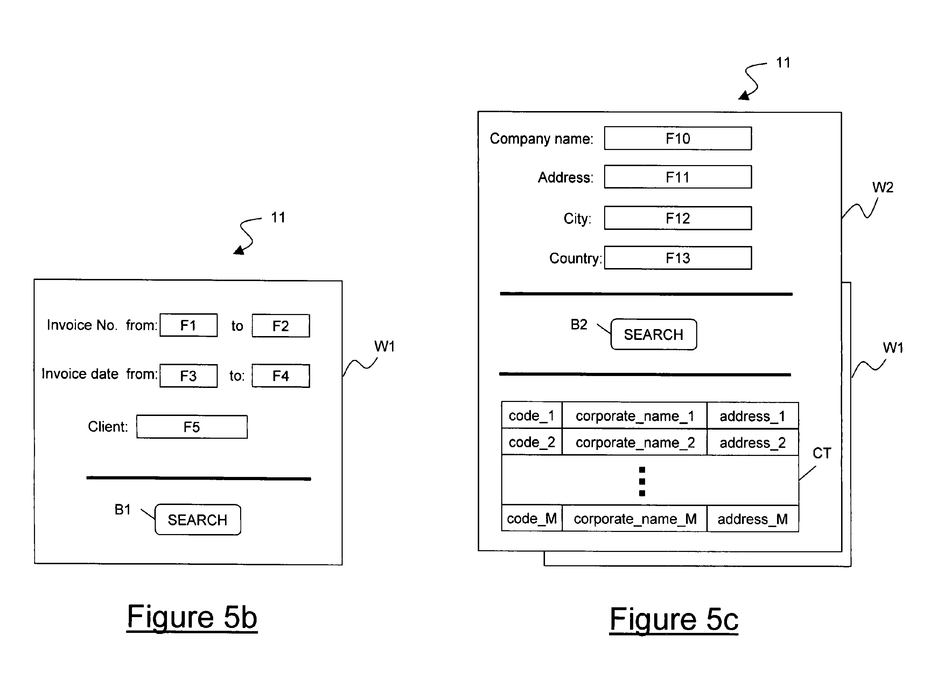

The graphical interface 11 of the data processing system 1 is shown in Figure 5b. It comprises a first search window W1 showing a number of fields F1-F5 and search button B1. For example, the fields F1 and F2 allow a search to be carried out by invoice number, the fields F3 and F4 allow a search by invoice date, and the field F5 allows a search by client. The search button B1 allows the search to be started according to the contents of the fields F1-F5.

When the field F5 in the first search window W1 is selected, the graphical interface 11 brings up a second search window W2, as shown in Figure 5c. The second search window W2 preferably comprises a number of fields F10-F13 and a further search button B2. When a part of the client name is written in the field F10 and the further search button B2 is clicked on, the graphical interface 13 displays a client table CT which lists all the clients whose company name has a portion the same as the contents of the field F10. The client table CT contains a different row for each client. Each row comprises for example a first field containing the client code: code_1, code_2 ..., code_M, a second field containing the company name: corporate_name_1, corporate_name_2, ..., corporate_name M and a third field containing the address: address_1, address_2, ..., address_M.

It is therefore possible to select the client for whom a search is to be carried out by selecting one of the rows in the client table CT. This results in closure of the second search window W2 and the automatic compilation of the field F5 of the first search window W1 with the company name shown in the second field of the row selected. The client search may then be started by pressing the search button B1.

Let us assume that the company receives from its bank an input table IDS (for example, an Excel table) which describes the payments made by the various clients of the company. The input data structure IDS is shown in Figure 5a. Said structure contains N rows. Each row comprises a first cell containing the payment date: date_1, date_2, ..., date_N, a second cell containing the amount paid: amount_1, amount_2, ..., amount_N, and a third cell containing the reason for the payment: reason_1, reason_2, ..., reason_N. According to the standard adopted by the bank, the reason includes the name of payer followed by a space and other information regarding the payment operation.

Let us assume, finally, that it is required to perform a search in the data processing system 1 for each client mentioned in the input table IDS.

This operation may be implemented by an interaction computer program 3 configured to carry out the following operations.

The interaction computer program 3, once started by a user, preferably blocks keyboard 21 and mouse 22 and then opens the file .xls containing the input data structure IDS shown in Figure 5a. Then preferably, the interaction computer program 3 reads the first row in the input data structure IDS, in particular reads the alphanumeric characters contained in the third cell (i.e. the alphanumeric characters of the reason for the payment) and stores them in the cache memory of the computer 2. Then, the interaction computer program 3 preferably opens the first search window W1 of the graphical interface 11 (see Figure 5b), positions the pointer P on the field F5 and selects it. This results in opening of the second search window W2. Then, the interaction computer program 3 preferably writes in the field F10 at least some of the alphanumeric characters contained in the cache memory of the computer 2. In particular, the interaction computer program 3 writes the alphanumeric characters contained in the cache memory of the computer 2 as far as the first space and then interrupts the writing operation. Then, the interaction computer program 3 preferably displaces the pointer P on the additional search button B3. This causes the graphical interface 11 to display a client table CT which contains all the clients whose company name has a portion the same as the contents of the field F10.

During a step substantially corresponding to step 31 in the flow chart of Figure 2, for each row in the client table CT, the interaction computer program 3 preferably reads all the alphanumeric characters contained in the second field (namely that in which the client company name is indicated), identifying one or more words and, during a step substantially corresponding to step 32 in the flow chart of Figure 2, compares the contents of the field with the contents in the third cell of the first row of the input data structure IDS. In particular, for each row in the client table CT, the interaction computer program 3 preferably determines whether the words of the second field are all included also in the third cell of the first row of the input data structure IDS. If all the words in a row (for example, the m-th row) are also included in the third cell of the first row in the input data structure IDS (i.e. if corporate_name_m is contained in reason_1), the interaction computer program 3 preferably performs a step substantially corresponding to step 33 in Figure 2, in which it positions the pointer P on the m-th row and selects it. In this way, the second window W2 is closed, and the first window W1 with the field F5 containing the company name included in the second field of the row selected is displayed. If none of the rows in the client CT has all the words of the second field included in the third cell of the first row of the input data structure IDS, the interaction computer program 3 preferably determines in which row the second field has a greater number of words included also in the third cell of the first row of the input data structure IDS and selects this row. Preferably, this takes place only if this number is greater than a predefined minimum threshold, which may be set by the operator. If this number is smaller than the predefined minimum threshold, the interaction computer program 3 concludes the operation with a failure message, which is recorded in the log file.

Still during the step substantially corresponding to step 33 of Figure 2, upon closure of the second window W1, the interaction computer program 3 preferably positions the pointer P on the search button B1 and selects it. In this way, the search by the system 1 is started. The results are then displayed on the graphical interface 11 (for example in a special area of the first search window W1 not shown in the drawings).

The interaction computer program 3 may then read from the graphical interface the results of the search and if necessary process them so as to issue further commands to the data processing system 1.

The method described above is repeated for all the rows of the input data structure IDS, thus performing a search for the outstanding owed amount for each client mentioned in the input data structure IDS.

In both the examples of application described above, therefore, the interaction computer program 3 interacts automatically with the data processing system 1, simulating the operations of reading alphanumeric characters from the graphical interface and issuing commands to the system 1 by use of mouse and keyboard. Interaction with the data processing system 1 is therefore advantageously much faster than manual interaction performed by a user. Moreover, advantageously, in both examples of application the user does not have practically any knowledge of operation of the graphical interface 11 of the system 1.

## Claims

1. Computer program product (3) configured to interact with a data processing system (1) having a graphical interface (11) suitable for being displayed on a screen (20) of a computer (2), wherein said computer program product (3) comprises code portions to perform a method when said computer program product (3) is run on said computer (2), wherein said method comprises the steps of:
a) reading at least one first alphanumeric character ("abc") comprised in an area (A) of said graphical interface (11);
b) processing said at least one first read alphanumeric character;
and
c) according to a result of said processing, issuing a command to said data processing system (1) through said graphical interface (11),
wherein said step c) comprises simulating a manual usage of an input peripheral (21, 22) of said computer (2) to perform an action on at least one graphical object (F, B) of said graphical interface (11).

2. Computer program product (3) according to claim 1, wherein said step of simulating a manual usage of an input peripheral (21, 22) comprises simulating a manual displacement of a mouse (22) of said computer (2) to move a pointer (P) on said graphical interface (11).

3. Computer program product (3) according to claim 2, wherein said step of simulating said manual displacement of a mouse (22) is implemented by means of a function SetCursorPos().

4. Computer program product (3) according to claim 2 or 3, wherein said step of simulating a manual usage of an input peripheral (21, 22) comprises simulating a manual push of a button of said mouse (22) to select a graphical object (B, F) of said graphical interface (11).

5. Computer program product (3) according to claim 4, wherein said step of simulating a manual push of a button of said mouse (22) is implemented by means of a function mouse_event.

6. Computer program product (3) according to any of the preceding claims, wherein said step of simulating a manual usage of an input peripheral (21, 22) comprises simulating a manual push of at least one key of a keyboard (21) of said computer (2) to write at least one second alphanumeric character on said graphical interface (11).

7. Computer program product (3) according to claim 6, wherein said step of simulating a manual push of at least one key of a keyboard (21) comprises recovering said at least one second alphanumeric character from a cache memory of said computer (2), and applying a command Keybd_event to said at least one second recovered alphanumeric character.

8. Computer program product (3) according to any of the preceding claims, wherein said step a) is implemented by means of an optical character recognition program OCR.

9. Computer program product (3) according to any of the preceding claims, wherein said method further comprises the following steps:
- disabling said input peripheral (21, 22) before performing said steps a), b) and c); and
- enabling said input peripheral (21, 22) after having performed said steps a), b) and c).

10. Computer program product (3) according to any of the preceding claims, wherein said method comprises also the following steps, after said step c):
d) reading at least one third alphanumeric character displayed by said data processing system (1) on said graphical interface (11) following the execution of said command;
e) processing said at least one third read alphanumeric character;
and
f) according to a result of said processing, issuing a further command to said data processing system (1) through said graphical interface (11),
wherein said step f) comprises simulating a further manual usage of said input peripheral (21, 22) to perform a further action on said at least one graphical object (F, B) of said graphical interface (11).

11. Computer program product (3) according to any of the preceding claims, wherein said method further comprises a step of interrupting the execution of said steps a), b) and c) at the reception of a "pause" instruction or of a "stop" instruction from an instruction input device cooperating with said computer (2).

12. Computer program product (3) according to any of the preceding claims, wherein said method comprises also a step of modifying the execution speed of said steps a), b) and c) at the reception of a "set/change speed" instruction from an instruction input device cooperating with said computer (2).

13. Digital data storage device encoding a computer program product (3), wherein said computer program product is according to any of claims 1 to 12.

14. Computer (2) configured to execute a data processing system (1) and having a screen (20) configured to display a graphical interface (11) of said data processing system (1), said computer (2) being further configured to run a computer program product (3) according to any of claims 1 to 13.
